# EUROPEAN PATENT SPECIFICATION

(11) **EP 0 571 630 B1**
(45) Date of publication and mention of the grant of the patent: **30.01.2002**
(21) Application number: 92921263.7
(22) Date of filing: 20.10.1992
(51) Int. Cl.: H01M 4/26, H01M 4/52, H01M 4/32

(54) **METHOD FOR PRODUCTION OF NICKEL PLATE AND ALKALI STORAGE BATTERY**
VERFAHREN ZUR HERSTELLUNG EINER NICKELPLATTE UND EINER ALKALIBATTERIE
PROCEDE DE FABRICATION D'UNE PLAQUE DE NICKEL ET D'UN ACCUMULATEUR ALCALIN

(30) Priority: 21.10.1991 JP 30232491
(43) Date of publication of application: 01.12.1993
(73) Proprietor: YUASA CORPORATION, Takatsuki-shi, Osaka 569 (JP)
(72) Inventor: BOGAUCHI, Takehito, Takatsuki-shi, Osaka 569 (JP); KISHIMOTO, Tomonori, Takatsuki-shi, Osaka 569 (JP); NAKAGAWA, Hiroe, Takatsuki-shi, Osaka 569 (JP); EGUCHI, Yoshihiro, Takatsuki-shi, Osaka 569 (JP); YAMANE, Mitsuo, Takatsuki-shi, Osaka 569 (JP)
(74) Representative: Linn, Samuel Jonathan
(86) International application number: PCT/JP92/01359
(87) International publication number: WO 93/08611

(56) References cited:
- EP-A- 0 337 029
- EP-A- 0 403 052
- JP-A- 1 200 555
- PATENT ABSTRACTS OF JAPAN vol. 008 no. 229 (E-273) ,20 October 1984 & JP-A-59 111264 (NIHON DENCHI KK) 27 June 1984,
- PATENT ABSTRACTS OF JAPAN vol. 008 no. 194 (E-264) ,6 September 1984 & JP-A-59 083348 (MATSUSHITA DENKI SANGYO KK) 14 May 1984,
- PATENT ABSTRACTS OF JAPAN vol. 008 no. 256 (E-280) ,22 November 1984 & JP-A-59 128765 (NIHON DENCHI KK) 24 July 1984,
- PATENT ABSTRACTS OF JAPAN vol. 016 no. 192 (E-1199) ,11 May 1992 & JP-A-04 026058 (YUASA BATTERY CO LTD) 29 January 1992,
- PATENT ABSTRACTS OF JAPAN vol. 016 no. 224 (E-1206) ,25 May 1992 & JP-A-04 039861 (YUASA BATTERY CO LTD) 10 February 1992,
- PATENT ABSTRACTS OF JAPAN vol. 016 no. 392 (E-1251) ,20 August 1992 & JP-A-04 129171 (YUASA BATTERY CO LTD) 30 April 1992,
- PATENT ABSTRACTS OF JAPAN vol. 7 no. 272 (E-214) ,3 December 1983 & JP-A-58 152371 (NIHON DENCHI KK) 9 September 1983,
- PATENT ABSTRACTS OF JAPAN vol. 007 no. 166 (E-188) ,21 July 1958 & JP-A-58 073964 (TOKYO SHIBAURA DENKI KK) 4 May 1983,
- PATENT ABSTRACTS OF JAPAN vol. 008 no. 107 (E-245) ,19 May 1984 & JP-A-59 023464 (MATSUSHITA DENKI SANGYO KK) 6 February 1984,

## Description

This invention relates to the manufacture of nickel electrode plates. Nickel electrode plates are used for alkaline batteries such as nickel-zinc batteries, nickel metal-hydride batteries and nickel-cadmium batteries. These batteries are used mainly as power supplies for portable electronic equipment, as portable power supplies and as power supplies for electric vehicles such as electric automobiles and scooters.

### Background

It is generally desired to minimise the weight and size of alkaline batteries, i.e. to increase their energy density.

Various types of nickel electrode plate such as sintered, pasted, button and pocket types are known for use as the positive electrode in an alkaline battery.

A sintered-type nickel plate is one in which a powder of positive active material having nickel hydroxide as principal component is filled into a porous substrate formed by sintering nickel powder on a porous substrate such as a punched steel plate or nickel net. Peeling-off of the nickel sintered product is liable to occur (due to weakening of mutual bonding between the sintered nickel powder particles) when the porosity of the substrate is increased. Therefore, a practical limit of porosity has been about 80% and the filling density of active material small: only an energy density of about 400 mAh/cc has been obtained. Pore diameters of the substrate are 10 µm or less and filling the positive active material requires a troublesome process of repeated solution impregnation.

A button-type nickel plate is one in which a small quantity of conductive material such as carbon powder is added to the positive active material powder and the composite powder is pressed into a pellet shape. A pocket-type nickel plate is one in which a punched steel plate is worked to form a pocket into which the positive active material powder is filled. That is, the positive active material powder is filled directly and sintered nickel powder is not used. Consequently, these plates lack current collecting property and offer an active material utilization efficiency as small as about 50% to 60%, with a performance considerably inferior to that of the sintered type nickel plates which offer an active material utilization efficiency as large as about 90%. Currently, in order to reduce these disadvantages fine particles such as nickel carbonyl powder are mixed with the positive active material powder but the performance can be improved by only about 10%. This is because nickel hydroxide of poor electric conductivity forms on surfaces of the nickel carbonyl powder particles at a positive electrode charge/discharge potential.

A pasted-type nickel plate is made, as described in EP-A-337029 and EP-A-403052, by mixing 1 to 30 wt% of CoO (cobalt monoxide) powder with the positive active material powder. The powder mixture is formed into a paste using a solvent such as MC (methyl cellulose) or CMC (carboxymethyl cellulose) and the paste is filled into a nickel fibre porous plate. CoO is dissolved in electrolyte solution and made to precipitate onto the porous plate and positive active material as β-Co(OH)₂ which is then subjected to charging to form a conductive network of β-CoOOH which has good electric conductivity, giving good discharge performance. Before the charging an aging process is required, i.e. the plate is kept still for one to three days after filling the electrolyte solution. If the plate is not subjected to this aging process the desired dissolution reaction of CoO shown in equation (I) below and precipitation reaction of β-Co(OH)₂ shown in equation (II) below will scarcely occur; furthermore the reactions for forming the conductive network shown in equations (III) and (IV) below become difficult so that active material utilization efficiency is less.

CoO+OH⁻→HCoOC⁻ (I)

HCoOO⁻+H₂O→β-Co(OH)₂+OH⁻ (II)

HCoOO⁻→CoOOH+e⁻ (III)

β-Co(OH)₂→β-CoOOH+H₂O+e⁻ (IV)

Furthermore, pasted-type nickel plates involve the following problems.
(1) The solubility of cobalt in the electrolyte solution is low and the quantity of electrolyte solution is small, so that the above reaction (I) does not take place sufficiently. Hence the need to carry out the aging process for a long period, or to repeat charging and discharging over several cycles, so that productivity is poor.
(2) Dissolved cobalt complex ions disperse and precipitate in various places as β-Co(OH)₂. Short-circuiting is liable to occur when they precipitate on a separator, while if they precipitate on a zinc negative electrode, hydrogen gas is produced violently to lower a hydrogen overvoltage and increase self-discharge at the negative electrode. When using the nickel plate in a nickel-zinc battery it has been necessary to convert CoO into β-CoOOH separately from the zinc electrode and then assemble the nickel plate into the battery. Many manufacturing steps are required as well as equipment for charging. In addition, peeling-off of the active material and breakage of the conductive network are liable to occur in processes such as formation and rinsing, causing such problems as a decrease in quantity of the active material and lowering of the active material utilization efficiency.
(3) CoO is oxidized to Co₃O₄ rather than being converted to β-CoOOH when it is left exposed to air. Therefore, battery performance based on CoO can not be obtained reliably.

The aim of the present invention is to provide new ways of processing a nickel hydroxide-based positive active material in the preparation of a nickel electrode plate.

In a first aspect as set out in claim 1 the invention provides a method of making a nickel electrode plate, comprising the steps of
(a) filling a powder of a positive active material, having nickel hydroxide as principal component, into a three-dimensional porous substrate comprising alkali-resistant metal, and
(b) subjecting the filled substrate to oxidation by an oxidising agent selected from K₂S₂O₈, Na₂S₂O₈, (NH₄)₂S₂O₈ and H₂O₂ in a solution also containing cobalt ions, forming conductive β-CoOOH coating on the surface of the positive active material.

In a second aspect as set out in claim 2 the invention provides a method of making a nickel electrode plate, comprising the steps of
(a) subjecting a powder of a positive active material, having nickel hydroxide as principal component, to oxidation by an oxidising agent selected from K₂S₂O₈, Na₂S₂O₈, (NH₄)₂S₂O₈ and H₂O₂ in a solution also containing cobalt ions, forming conductive β-CoOOH coating on the surface of the positive active material, and
(b) filling the oxidised positive active material into a three-dimensional porous substrate comprising alkali-resistant metal.

The oxidized positive active material may be mixed with cobalt oxyhydroxide powder before filling into the substrate.

Further aspects are the electrode plate obtained thereby and a method in which this is made up into an alkaline battery, as set out in claims 9 and 10 respectively.

Various preferred options are set out in the subclaims 4 to 8.

Our attention has been drawn to JP-A-59/111264 and JP-A-59/128765 which describe the use of potassium peroxosulphate (among other oxidizing agents) to act on nickel hydroxide powder in a solution of cobalt salt. However this is done under acid conditions in order to produce a mixed oxide of nickel/cobalt for an electrode, and has no relevance to forming coatings of β-CoOOH on nickel hydroxide.

The invention is now illustrated by means of examples, with reference to the accompanying figures in which
Fig. 1 is a diagram of relations between numbers of charge/discharge cycles and active material utilisation efficiency in batteries of Embodiments 1 to 4 and a Comparative Example, and
Fig. 2 is a diagram of the relation between CoOOH grain size and active material utilization efficiency in batteries of Embodiment 4's type.

### Embodiment 1

Spherical nickel hydroxide powder including 5 wt% cadmium hydroxide was formed into a paste with 2 wt% CMC, filled into a substrate comprising a nickel fibre porous body, dried for 1 hour at 80°C and then pressed.

The prepared filled substrate was put in an aqueous solution saturated with dissolved cobalt ions, having potassium hydroxide as principal component and a specific gravity of 1.25. K₂S₂O₈ was added up to the molar number or more of cobalt ions, until oxygen gas was produced. After completion of the reaction the filled substrate was rinsed, dried, pressed, and then coated with Teflon® on its surface. Thus, a nickel plate was prepared.

### Embodiment 2

Spherical nickel hydroxide powder including 5 wt% cadmium hydroxide was put in an aqueous solution saturated with dissolved cobalt ions, having potassium hydroxide as principal component and a specific gravity of 1.25. K₂S₂O₈ was added up to the molar number or more of cobalt ions, until oxygen gas was produced.

After completion of the reaction, the powder was filtered, rinsed and dried. It was then formed into a paste with 2 wt% CMC, filled into a substrate comprising a nickel fibre porous body, dried for 1 hour at 80°C, pressed, and then coated with Teflon® on its surface. Thus, a nickel plate was prepared.

### Embodiment 3

Spherical nickel hydroxide powder including 5 wt% cadmium hydroxide was mixed with CoOOH powder having a grain size of 1µm, at a weight ratio of 95 to 5.

The prepared mixture was filtered, rinsed and dried. It was then formed into a paste with 2 wt% CMC, filled into a substrate comprising a nickel fibre porous body, dried for 1 hour at 80°C, pressed, and coated with Teflon® on its surface. Thus, a nickel plate was prepared.

### Embodiment 4

Spherical nickel hydroxide powder including 5 wt% cadmium hydroxide was put in an aqueous solution saturated with dissolved cobalt ions, having potassium hydroxide as principal component and a specific gravity of 1.25. K₂S₂O₈ was added up to the molar number or more of cobalt ions until oxygen gas was produced.

After completion of the reaction, the powder was filtered, rinsed and dried. The prepared powder was mixed with CoOOH powder having a grain size of 1µm at a weight ratio of 95 to 5.

The prepared mixture was filtered, rinsed and dried. It was then formed into a paste with 2 wt% CMC, filled into a substrate comprising a nickel fibre porous body, dried for 1 hour at 80°C, pressed, and coated with Teflon® on its surface. Thus, a nickel plate was prepared.

### Comparative Example

Spherical nickel hydroxide powder including 5 wt% cadmium hydroxide was mixed with CoO powder having a grain size of 1µm and a surface area of 70 m²/g at a weight ratio of 95 to 5. This mixing was done in an aqueous solution having potassium hydroxide as principal component and a specific gravity of 1.25, and the mixture was stirred sufficiently.

The prepared mixture was filtered, rinsed and dried. It was then formed into a paste with 2 wt% CMC, filled into a substrate comprising a nickel fibre porous body, dried for 1 hour at 80°C, pressed, and coated with Teflon® on its surface. Thus, a nickel plate was prepared.

The nickel plates of embodiments 1 to 4 and the Comparative Example were used as positive electrodes combined with respective negative electrodes (pasted-type cadmium plates) and separators comprising polyamide nonwoven fabrics, forming nickel-cadmium batteries A₁ to A₄ (Embodiments) and B₁ (Comparative) respectively, with nominal capacity of 2.0Ah. An aqueous solution having a principal component of potassium hydroxide and a specific gravity of 1.25 was used as the electrolyte solution, and was filled to a level immersing 90% of the volumes of the positive electrode, negative electrode and separator. The battery B₁ was subjected to the aging process after filling the electrolyte solution, and subsequent formation by charging.

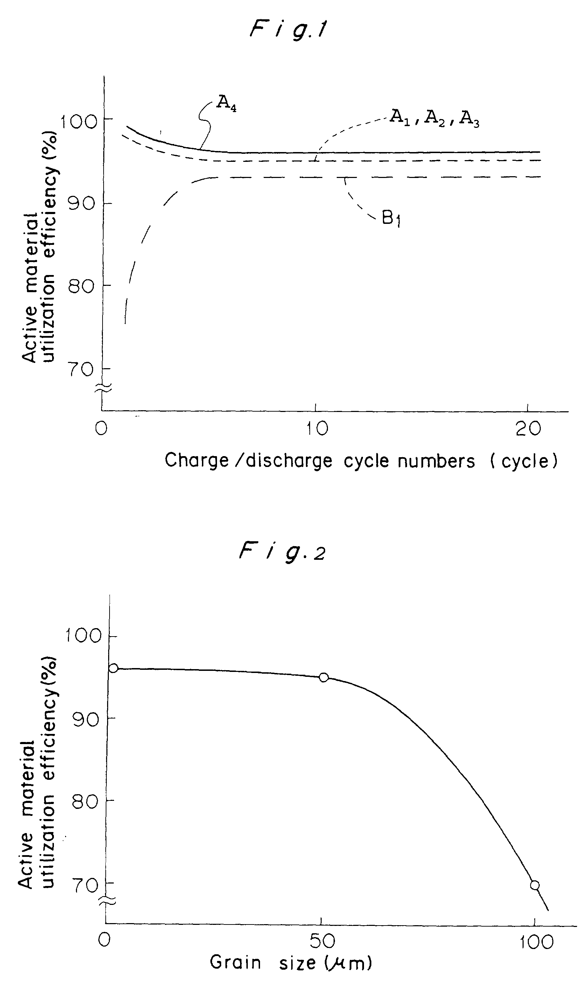

The batteries A₁ to A₄ and B₁ were investigated with respect to the relation between the number of charge/discharge cycles and active material utilization efficiency. Charging was done at a charging current of 0.1 CA for 11 hours, and discharging at a discharge current of 0.2 CA. Results are shown in Fig. 1.

As seen from Fig. 1, high active material utilization efficiencies are available from the first cycle in the batteries A₁ to A₄ whereas in battery B₁ the active material utilization efficiency is small at the initial stage of cycling and about three cycles are necessary to obtain stable values.

In the batteries A₁ to A₄, CoO and cobalt ions are oxidised by K₂S₂O₈ (oxidising agent) to become β-CoOOH of good electric conductivity, formed on the surfaces of nickel hydroxide powder particles constituting the positive active material so that a conductive network is formed to improve the conduction efficiency between the positive active material particles and between the positive active material and the substrate. In the battery B₁, however, with β-CoOOH formation carried out by charging, CoO is not completely converted to β-CoOOH at the initial stage so that conduction efficiency is low and charging and discharging reactions are incomplete.

Similar results were obtained even when the nickel plates of the batteries A₁ to A₄ were used after standing in air for a while. This is because the CoO and cobalt ions had already been oxidised to β-CoOOH by the oxidising agent.

Nickel plates were then formed in the same way as in Embodiment 4 except that the grain size of CoOOH used was adjusted to 10µm, 50µm and 100µm respectively. Batteries the same as the above were formed using these nickel plates, to investigate stabilized active material utilization efficiencies after the batteries had been subjected to several cycles of charging and discharging. Results are shown in Fig. 2, showing that the active material utilization efficiency of CoOOH is decreased when the grain size exceeds 50µm. Accordingly, the grain size of CoOOH used is preferably 50µm or smaller.

As described in the Embodiments 1 to 4, the present invention can provide a nickel plate for an alkaline battery which offers high active material utilization efficiency from the first cycle and is excellent in discharge characteristics. In the methods described herein the aging process and the charging and discharging for β-CoOOH formation are not required, so that productivity is better. Further, an intermediate product before getting the β-CoOOH does not cause the previously-mentioned short-circuiting and bad influences with zinc electrodes. Moreover, since the residual quantity of CoO is small, this method can provide an alkaline battery such as a nickel-zinc battery having stable performance. The following possible variants should be noted.
(1) Nickel plates formed by the same methods as in Embodiments 1 to 4 may be used for nickel-zinc batteries and nickel metal-hydride batteries.
(2) The cobalt plating on the substrate may be applied to nickel plates formed by methods as in Embodiments 1 to 4.
(3) Foamed nickel may be used for the substrate, or an alkali-resistant metal other than nickel may be used.
(4) Na₂S₂O₈, (NH₄)₂S₂O₈ and H₂O₂ may also be used as the oxidising agent.

## Claims

1. A method of making a nickel electrode plate, comprising the steps of
(a) filling a powder of a positive active material, having nickel hydroxide as principal component, into a three-dimensional porous substrate comprising alkali-resistant metal, and
(b) subjecting the filled substrate to oxidation by an oxidising agent selected from K₂S₂O₈, Na₂S₂O₈, (NH₄)₂S₂O₈ and H₂O₂ in a solution also containing cobalt ions, forming conductive β-CoOOH coating on the surface of the positive active material.

2. A method of making a nickel electrode plate, comprising the steps of
(a) subjecting a powder of a positive active material, having nickel hydroxide as principal component, to oxidation by an oxidising agent selected from K₂S₂O₈, Na₂S₂O₈, (NH₄)₂S₂O₈ and H₂O₂ in a solution also containing cobalt ions, forming conductive β-CoOOH coating on the surface of the positive active material, and
(b) filling the oxidised positive active material into a three-dimensional porous substrate comprising alkali-resistant metal.

3. A method according to claim 2 in which the oxidised positive active material is mixed with cobalt oxyhydroxide powder before filling into the substrate.

4. A method according to claim 3 in which the cobalt oxyhydroxide powder has a grain size of 50 µm or less.

5. A method according to any one of the preceding claims in which the porous substrate has a cobalt plating.

6. A method according to any one of the preceding claims in which the porous substrate is a fibre or foamed body.

7. A method according to any one of the preceding claims in which the alkali-resistant metal of the porous substrate is nickel.

8. A method according to any one of the preceding claims in which material filled into the porous substrate is filled in the form of a paste.

9. A nickel electrode plate obtainable in accordance with any one of claims 1 to 8.

10. A method of making an alkaline battery in which a nickel electrode plate prepared in accordance with any one of claims 1 to 8 is assembled with a zinc, metal hydride or cadmium electrode and a separator.

## Patentansprüche

1. Verfahren zur Herstellung einer Nickelelektrodenplatte, das die folgenden Schritte umfasst:
(a) Einfüllen eines Pulvers aus einem positiven aktiven Material mit Nickelhydroxid als Hauptkomponente in ein dreidimensionales poröses Substrat, das ein alkaliresistentes Material umfasst; und
(b) Oxidieren des gefüllten Substrats mit einem Oxidationsmittel, das aus K₂S₂O₈, Na₂S₂O₈, (NH₄)₂S₂O₈ und H₂O₂ ausgewählt ist, in einer Lösung, die auch Cobaltionen enthält, unter Bildung einer leitfähigen β-CoOOH-Beschichtung auf der Oberfläche des positiven aktiven Materials.

2. Verfahren zur Herstellung einer Nickelelektrodenplatte, das die folgenden Schritte umfasst:
(a) Oxidieren eines Pulvers aus einem positiven aktiven Material mit Nickelhydroxid als Hauptkomponente mit einem Oxidationsmittel, das aus K₂S₂O₈, Na₂S₂O₈, (NH₄)₂S₂O₈ und H₂O₂ ausgewählt ist, in einer Lösung, die auch Cobaltionen enthält, unter Bildung einer leitfähigen β-CoOOH-Beschichtung auf der Oberfläche des positiven aktiven Materials; und
(b) Einfüllen des oxidierten positiven aktiven Materials in ein dreidimensionales poröses Substrat, das ein alkaliresistentes Material umfasst.

3. Verfahren gemäß Anspruch 2, bei dem das oxidierte positive aktive Material mit Cobaltoxidhydroxid-Pulver gemischt wird, bevor man es in das Substrat einfüllt.

4. Verfahren gemäß Anspruch 3, bei dem das Cobaltoxldhydroxld-Pulver eine Korngröße von 50 um oder weniger hat.

5. Verfahren gemäß einem der vorstehenden Ansprüche, bei dem das poröse Substrat eine Cobaltplattierung aufweist.

6. Verfahren gemäß einem der vorstehenden Ansprüche, bei dem das poröse Substrat eine Faser oder ein Schaumstoffkörper ist.

7. Verfahren gemäß einem der vorstehenden Ansprüche, bei dem das alkali-resistente Metall des porösen Substrats Nickel ist.

8. Verfahren gemäß einem der vorstehenden Ansprüche, bei dem das in das poröse Substrat eingefüllte Material in Form einer Paste eingefüllt wird.

9. Nickelelektrodenplatte, die gemäß einem der Ansprüche 1 bis 8 erhältlich ist.

10. Verfahren zur Herstellung einer Alkalibatterie, bei dem eine gemäß einem der Ansprüche 1 bis 8 hergestellte Nickelelektrode mit einer Zink-, Metallhydrid- oder Cadmiumelektrode und einem Separator zusammengesetzt wird.

## Revendications

1. Procédé de fabrication d'une plaque d'électrode de nickel, comprenant les étapes consistant à:
(a) verser une poudre d'un matériau actif positif, contenant de l'hydroxyde de nickel comme principal composant, dans un substrat poreux tridimensionnel comprenant un métal résistant aux alcalis; et
(b) soumettre le substrat rempli à une oxydation par un agent oxydant choisi parmi K₂S₂O₈, Na₂S₂O₈, (NH₄)₂S₂O₈ et H₂O₂ dans une solution contenant aussi des ions cobalt, pour former un revêtement conducteur β-CoOOH sur la surface du matériau actif positif.

2. Procédé de fabrication d'une plaque d'électrode de nickel, comprenant les étapes consistant à:
(a) soumettre une poudre d'un matériau actif positif, contenant de l'hydroxyde de nickel comme composant principal, à une oxydation par un agent oxydant choisi parmi K₂S₂O₈, Na₂S₂O₈, (NH₄)₂S₂O₈ et H₂O₂ dans une solution contenant aussi des ions cobalt, pour former un revêtement conducteur β-CoOOH sur la surface du matériau actif positif, et
(b) verser le matériau actif positif oxydé dans un substrat poreux tridimensionnel comprenant un métal résistant aux alcalis.

3. Procédé selon la revendication 2, dans lequel le matériau actif positif est mélangé à une poudre d'oxyhydroxyde de cobalt avant d'être versé dans le substrat.

4. Procédé selon la revendication 3, dans lequel la poudre d'oxyhydroxyde de cobalt a une taille de grain de 50 µm ou moins.

5. Procédé selon l'une quelconque des revendications précédentes, dans lequel le substrat poreux porte un revêtement de cobalt.

6. Procédé selon l'une quelconque des revendications précédentes, dans lequel le substrat poreux est un corps fibreux ou mousse.

7. Procédé selon l'une quelconque des revendications précédentes, dans lequel le métal résistant aux alcalis du substrat poreux est le nickel.

8. Procédé selon l'une quelconque des revendications précédentes, dans lequel le matériau versé dans le substrat poreux est versé sous la forme d'une pâte.

9. Plaque d'électrode de nickel obtenue selon l'une quelconque des revendications 1 à 8.

10. Procédé de fabrication d'une pile alcaline, dans lequel une plaque d'électrode de nickel préparée selon l'une quelconque des revendications 1 à 8 est assemblée avec une électrode de zinc, d'hybride métallique ou de cadmium et un séparateur.
